# EUROPEAN PATENT APPLICATION

(11) **EP 4 625 271 A1**
(43) Date of publication of application: **01.10.2025**
(21) Application number: 24382334.1
(22) Date of filing: 27.03.2024
(51) Int. Cl.: G06N 10/60, G06N 10/80

(54) **METHOD FOR QUANTUM ALGORITHM GENERATION OR ORCHESTRATION FOR OPTIMIZATION PROBLEMS**

(71) Applicant: Qcentroid Labs , S.L., 48001 Bilbao (Bizkaia) (ES)
(72) Inventor: Kuchkovsky Jimenez, Carlos, Madrid (ES); Peris Hueso, Antonio, Madrid (ES); Calvo Torrijos, Alberto, Madrid (ES)
(74) Representative: Pons IP

(57) **Abstract**

A method for quantum algorithm generation or orchestration for solving optimization problems comprising the steps of: defining an optimization problem as a set of parameters and constraints; determining an optimum set of quantum and/or traditional algorithms for the problem defined and its hyperparameters by determining a strategy for solving selected from: annealing based, gate based or black box approach, a machine where the problem should be executed, adapting the optimization problem data to the quantum algorithm; and providing the adapted optimization problem to the quantum algorithm for being solved by using reward functions or accuracy variables for optimization.

## Description

### OBJECT OF THE INVENTION

The invention is referred to the field of quantum computing, more particularly to the quantum algorithms generation.

The object of the invention is a method for quantum algorithm generation or orchestration intended to solve optimization problems. The method of the invention allows to obtain a structured, adaptable, and comprehensive process for determining the quantum algorithm that best fits to a particular optimization problem.

### BACKGROUND ART

In the rapidly evolving landscape of quantum and advanced computing, businesses and organizations are continuously grappling with a multitude of challenges. Quantum computing promises to revolutionize industries by solving problems deemed unsolvable by classical computers, nevertheless, the practical implementation of these quantum solutions remains complex and, at times, elusive.

Some of the problems related to the generation of quantum solutions for optimization problems are:
- Complexity of Problem Definition: The transition from identifying a business problem to translating it into a format suitable for quantum algorithms is riddled with intricacies. Traditional methods often lack the granularity needed to effectively harness the potential of quantum computing.
- Seamless Integration Hurdles: Bridging quantum algorithms with the appropriate hardware is another significant challenge. The dynamic nature of quantum algorithms, coupled with the variety of quantum hardware platforms available, makes integration a non-trivial task.
- Quantum algorithms executing in a quantum computing with the right quantum computing hyperparametrization: Defining the variables that will provide a better result for the execution of quantum algorithms on a quantum machine is a complex task, for the definition of the right combination of hyperparameters and the traceability about which solutions are being generated with the combination of algorithms, hyperparameters and quantum computing hardware is a highly complex process.

- Operational Challenges: Once integrated, the actual execution of quantum algorithms in real-world scenarios involves managing resources, handling asynchronous computations, and ensuring secure and efficient data transmissions.
- Integration of quantum computing and algorithms over workflows.
- Continuous Evolution: Quantum computing is not static. New algorithms emerge, hardware platforms evolve, and business problems shift. Organizations need a mechanism to continuously calibrate and adapt their quantum solutions to remain at the forefront of innovation.
- Results Interpretation & Integration: Post computation, deciphering the results, benchmarking algorithms, and integrating the optimal solution into business and organizations workflows are tasks that demand a structured approach.

It became evident that for quantum computing to transition from theoretical marvel to practical business solution, a structured, adaptable, and comprehensive process is imperative.

### DESCRIPTION OF THE INVENTION

The present invention discloses a method for quantum algorithm generation or orchestration which allows to solve optimization problems providing a clear pathway for businesses to leverage the transformative power of quantum computing effectively and efficiently.

The method for quantum algorithm generation or orchestration for solving optimization problems of the invention comprises the steps of:
- defining an optimization problem as a set of parameters and constraints;
- determining:
   ∘ an optimum set of quantum and/or traditional algorithms for the problem defined and its hyperparameters by determining a strategy for solving selected from: annealing based, gate based or black box approach,
   ∘ a machine where the problem should be executed,
- adapting the optimization problem data to the quantum algorithm; and
- providing the adapted optimization problem to the quantum algorithm for being solved by using reward functions or accuracy variables for optimization.

Preferably, the specific code for implementing the algorithm to the specific hardware is generated.

The step of providing the adapted optimization problem to the quantum algorithm for being solved could be performed in an asynchronous manner. Also, the problem could be divided into multiple subproblems, and two or more subproblems could be run in parallel, thus enabling parallel computing.

Preferably, the method of the invention could further comprise a step of automatically generating an API for providing user access management, security protocols and monetization mechanisms.

Also, the method of the invention could comprise a step of generating a synthetic data Set Generation for algorithm testing.

In some embodiments, the step of determining an optimum set of quantum and/or traditional algorithms involves the use of: quantum hardware, traditional hardware platforms (CPUs and GPUs) and/or photonic or neuromorphic computing.

Preferably, the method of the invention could further comprise a step of determining optimum algorithms, machines and hyperparameters for a defined problem by using artificial intelligence trained with past data or the synthetic data Set Generation.

Also, the method of the invention could further comprise a step of continuously updating the optimum algorithms, machines and hyperparameters using the artificial intelligence trained with new incoming data. Also, new algorithms could be added to the pool of available algorithms for solving.

On selecting the annealing based solver, the hyperparameters could be defined as:
- annealing time, selecting the time for the quantum annealer to evolve from an initial Hamiltonian to the problem Hamiltonian;
- annealing schedule, selecting how the Hamiltonian evolves over time; and
- chain strength of physical qubits representing logical qubits, selecting the strength of the connections between said physical qubits.

In the case, wherein a gate based solver is selected, the hyperparameters could be defined as:
- Circuit Depth, selecting a number of gate layers in the circuit;
- Gate Selection, selecting types of gates used and their arrangement;
- Error Correction Code, selecting a quantum error correction code, its code distance and its code rate; and
- Initial State Preparation, selecting the method used to prepare the initial state of the qubits.

The problem to be solved is defined in a quantum realm. The problem, could be defined by the following forms:
- Business definition: a functional definition comprising the data and the objective. For simplifying its definition, it could be divided in subfields.
- Mathematic definition: a definition of the mathematic model used for the problem defined.
- Technical definition: a structured definition of: problem input data (comprising also constraints) and functions or objective variables.to optimize.

Preferably, the objective variables are goal use case objective function/variable computing time, cost, computing cost, CO₂ emissions, energy consumption and environmental, social and governance criteria. The objective variables could be determined for each combination of algorithm-hyperparameters-hardware selected. Thus, the objective variables could be compared to optimize the selection.

Preferably, the computing time and the time are obtained from the hardware. Alternatively, said variables could be inferred.

The comparison of objective variables could be performed by the user or automatically. For that, the user defines policies for the objective variables and it is determined if the combinations of algorithm-hyperparameters-hardware selected fulfills said policies.

The method, thus, could further comprise a step of learning from the relationship of combination selected and objective variables to determine optimum recipes of hyperparameters according to a policy, optimum combination or determine automatically some hyperparameters.

Moreover, the present invention also relates to a computer program adapted to perform the steps of the method defined and a computer readable storage medium comprising said computer program.

### DESCRIPTION OF THE DRAWINGS

Fig. 1. Shows a block diagram comprising the main steps of the method of the invention.
Fig. 2. Shows a block diagram comprising the different strategies for solving the optimization problem and its hyperparameters.
Fig. 3. Shows a block diagram comprising an exemplary embodiment of a workflow of the method of the invention.
Figure 4. Shows an example of objective variables for a combination of algorithm-hyperparameters-hardware and the policy defined by the user.

### PREFERRED EMBODIMENTS OF THE INVENTION

The invention relates to a method for quantum algorithm generation or orchestration comprising unique steps and functionalities to give solutions of the complexity of having an adaptive and dynamic combination of the right algorithms, hyperparameters and hardware for solving a defined problem.

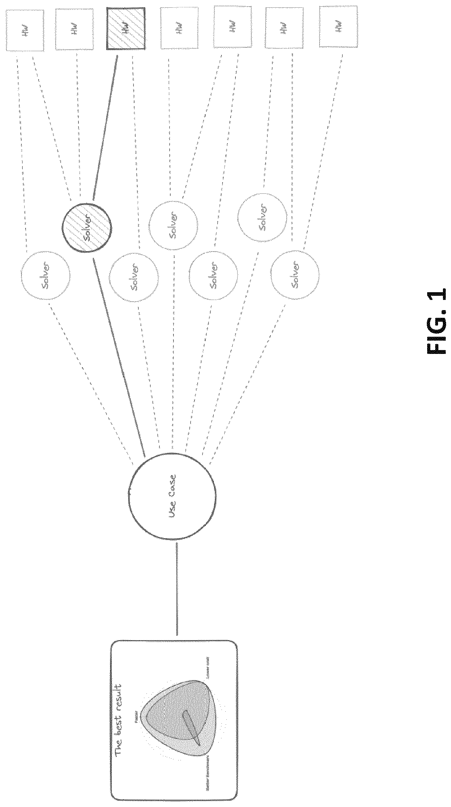

Figure 1 shows a high-level definition of an implementation of the method of the invention. In said figure, it is shown how to obtain the optimal result by connecting one use case or problem with multiple solvers and multiple hardware machines.

The method of the invention, in an implementation, follows the procedure of:
1. Defining use case or problem:
   - Business Description: A structured methodology where businesses can detail and describe their specific use cases suitable for quantum solutions and their base target policies.
   - Math Modeling: The application of proprietary mathematical models to formulate problems in the quantum realm.
   - Technical Schema: A schema that categorically defines:
      - Input data the problem can accept.
      - Rewards/accuracy variables in a request.
      - Expected output data from the computation.
2. API Creation:
   - With the information derived from the use case definition, an API specific to said use case is automatically generated.
   - The API incorporates:
      - User access management.
      - Advanced security protocols.
      - Credit monetization mechanisms.
3. Synthetic Data Set Generation, using Generative Al or data set assignation:
   - Leveraging the provided schema and problem definition, generate varied synthetic data sets, tailored to simulate real-world scenarios for algorithm testing.
   - Assignation of data set available to the use case.
4. Algorithm-Hardware integration and hyperparameter generation or configuration:
   - Integration, by connecting specific code repositories directly to the defined use case, allowing seamless execution and continuous updating, of.
      - Quantum algorithms and hardware.
      - Traditional algorithms and hardware platforms (CPUs and GPUs).
      - Other advanced computing technologies like photonic or neuromorphic computing
   - Quantum computing hw hyperparameters :
      - Definition by user
      - Selected from past execution
      - Automated generation, using generative Al with past data
5. Execution process:
   - Using parallel execution of multiple algorithms assigned to a specific use case.
      - The execution can be done by:
         ▪ No Code (web app)
         ▪ API
         ▪ Blockchain
         ▪ Generative Al prompts
   - This involves:
      - Dynamically creating containers.
      - Sending specific algorithm code to its corresponding hardware machine.
      - Managing the access credentials for each machine to ensure security and functionality.
6. Asynchronous Management of the waiting period for each machine to compute the algorithms and return results in an asynchronous manner, ensuring efficiency.
7. Algorithms results and benchmarking visualization.
   - Results presented via API responses.
   - Results visualized on a web application, enabling users to view individual algorithm results and comprehensive benchmarking data.
   - Generative Al results and benchmarking text and visualization combining:
      ▪ Use case definition: Business, mathematical model and technical schema.
      ▪ Algorithms result.
      ▪ Hardware features and hyperparameters definition.
8. Algorithms Hardware "circuit" Selection & Integration:
   - Optionally, allowing users to select a particular algorithm from a tested set to respond to the use case API, optimizing for the best results.
   - Thus, on selecting "circuit" selection, the platform automatically chooses a combination of the algorithms, hyperparameters and hardware that is assigned as "productive" and able to be consumed by the API.
9. Continuous Calibration/Experimentation Cycle, for having the right adaptive and dynamic combination of the right algorithms, hyperparameters and hardware.
   - Continuous calibration mechanism, allowing:
      - Constant execution and benchmarking of new versions of algorithms or hardware.
      - Integration of new algorithms to existing use cases, ensuring that the best solution is always in operation.
   - Continuous calibration and dynamic adaptation.
10- Repeating in an automatic way or manually steps 4 to 7, for updating the automatic selection in step 8.

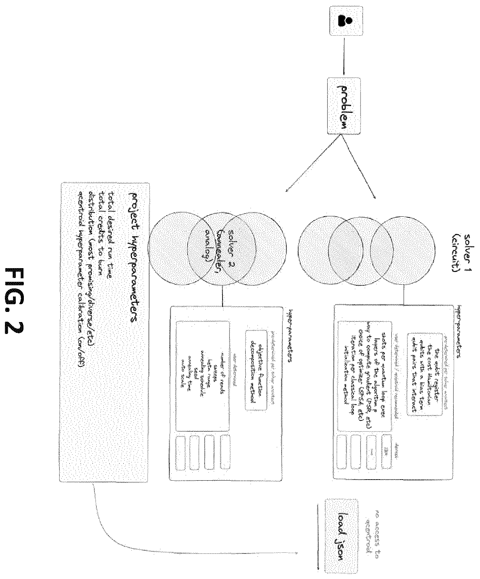

Figure 2 shows an implementation of the method of the invention wherein the problem is solved by two solvers, one gate based and one annealing based.

In circuit-based quantum computing, quantum circuits made of gates are used to perform computations. Hyperparameters here might include:
- Circuit Depth: The number of gate layers in the circuit. A deeper circuit can represent more complex transformations but may also be more susceptible to errors due to noise and decoherence.
- Gate Selection: The specific types of gates used and their arrangement can be considered hyperparameters. Some algorithms may perform better with certain gate sets.
- Error Correction Code: The choice of quantum error correction code, as well as its parameters like code distance and code rate, is crucial for maintaining coherence and fidelity in quantum circuits.
- Initial State Preparation: The method used to prepare the initial state of the qubits can be a vital hyperparameter, especially for algorithms that are sensitive to the starting conditions.

In the specific implementation of Figure 2, the gate-based or circuit solver allows the selection of multiple hyperparameters such as:
- Hyperparameters predetermined by the solver:
   ∘ Qubit register;
   ∘ Cost Hamiltonian;
   ∘ Qubits with a bias term;
   ∘ Qubits pairs that interact;
- Hyperparameters selected by the user:
   ∘ Shots per quantum loop execution;
   ∘ Layers of the algorithm;
   ∘ Way to compute gradient (PSR, etc.);
   ∘ Choice of optimizer (SPSA, etc.);
   ∘ Iteration per classical loop;
   ∘ Initialization method.

Then, the hardware equipment for solving is selected from a list of available hardware machines to which a Json archive is sent.

In quantum annealing, the system evolves under the influence of a Hamiltonian that gradually transforms from representing the initial state to representing the solution to the problem. Hyperparameters in this context might include:
- Annealing Time: The total time it takes for the quantum annealer to evolve from the initial Hamiltonian to the problem Hamiltonian. The choice of annealing time can affect the probability of finding the global minimum of the problem. Too short annealing times may not allow the system to reach its ground state, while too long times may not be practical for certain applications.
- Annealing Schedule: The function that describes how the Hamiltonian evolves over time. Modifying this schedule can help in avoiding local minima and improving the chances of finding the global minimum.
- Chain Strength: In problems where logical qubits are represented by chains of physical qubits, the strength of the connections within these chains is a critical hyperparameter. If the chain strength is too weak, the qubits within a chain may not behave uniformly, leading to incorrect results.

In the specific implementation of Figure 2, the annealing solver allows the selection of other hyperparameters such as:
- Hyperparameters predetermined by the solver:
   ∘ Objective function;
   ∘ Decomposition method;
- Hyperparameters selected by the user:
   ∘ Number of reads;
   ∘ Sweeps;
   ∘ Beta range;
   ∘ Annealing schedule;
   ∘ Auto scale.

Then, in the same way than in gate-based solvers, the hardware equipment for solving is selected from a list of available hardware machines to which a Json archive is sent.

Said Json archive also comprises other project hyperparameters such as: total desired run time; total credits to burn; distribution (most promising, diverse...) and automatic hyperparameter calibration (on or off).

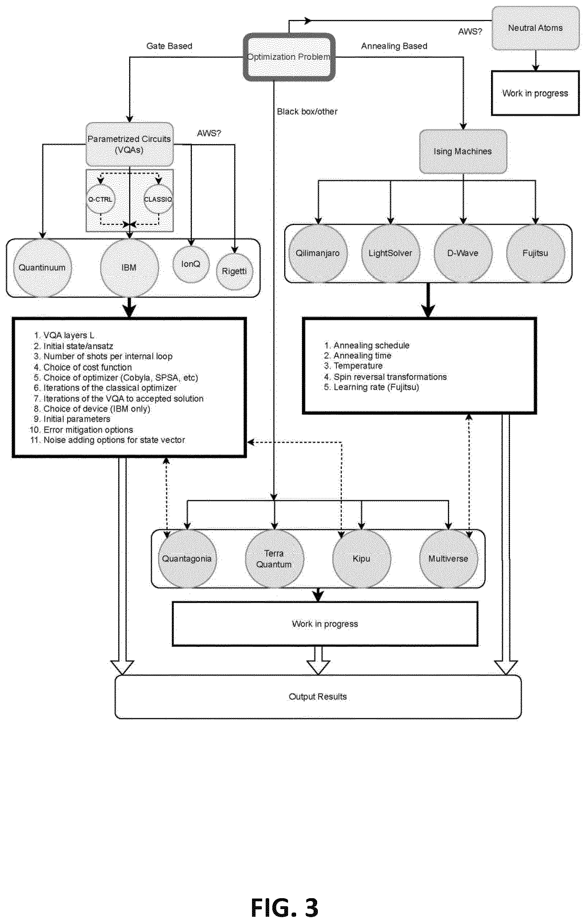

Figure 3 shows a more detailed scheme of the possibilities for solving an optimization problem according to the method of the invention. In this figure, it is shown that the optimization problem (or part of it) could be send to multiple solvers.

In particular, the problem could be sent to gate based, annealing based, amazon web services or black box solvers.

The annealing-based solvers use ising machines selected from: Qilimanjaro, LightSolver, D-Wave or Fujitsu. The hyperparameters in this case are: an annealing schedule, an annealing time, a temperature, spin reversal transformations and a learning rate.

In the case of gate-based solvers, are used parametrized Circuits (VQAs) selected from Quantinuum, IBM machines, IonQ or Rigetti. The hyperparameters in this case are: VQA layers L, Initial state, number of shots per internal loop, choice of cost function, choice optimizer (Cobyla, SPSA...), iterations of the classical optimizer, iterations of the VQA to accepted solution, choice of device (when IBM machines are selected), initial parameters, error mitigation options and noise adding options for state vector.

The black box solvers use machines selected from: Quantagonia, Terra Quantum, Kipu or multiverse machines.

Finally, the optimization problem can also be solved by using neutral atoms machines.

In some embodiments, objective variables are determined for each combination of algorithm-hyperparameters-hardware selected to compare them.

In these cases, the user can define policies for the objective variables for determining if the combinations of algorithm-hyperparameters-hardware selected fulfill said policies.

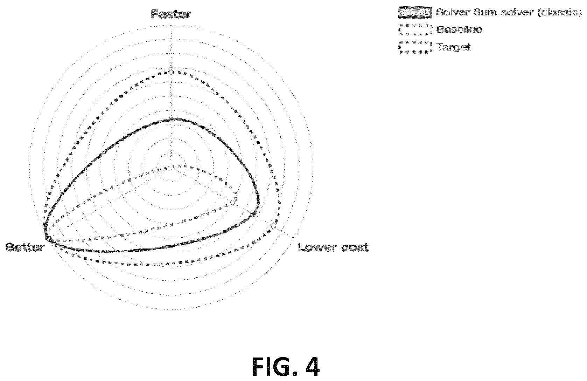

Figure 4 shows an example of the objective variables for a combination of algorithm-hyperparameters-hardware and the policy defined by the user. Thus, the combination of algorithm-hyperparameters-hardware should be optimized to meet the policy defined.

## Claims

1. A method for quantum algorithm generation or orchestration for solving optimization problems comprising the steps of:
- defining an optimization problem as a set of parameters and constraints;
- determining:
∘ an optimum set of quantum and/or traditional algorithms for the problem defined and its hyperparameters by determining a strategy for solving selected from: annealing based, gate based or black box approach,
∘ a machine where the problem should be executed,
- adapting the optimization problem data to the quantum algorithm; and
- providing the adapted optimization problem to the quantum algorithm for being solved by using reward functions or accuracy variables for optimization.

2. The method according to claim 1, further comprising a step of automatically generating an API for providing user access management, security protocols and monetization mechanisms.

3. The method according to claim 1, further comprising a step of generating a synthetic data Set Generation for algorithm testing.

4. The method according to claim 1, wherein the step of determining an optimum set of quantum and/or traditional algorithms involves the use of: quantum hardware, traditional hardware platforms (CPUs and GPUs) and/or photonic or neuromorphic computing.

5. The method according to claim 1, further comprising a step of determining optimum algorithms, machines and hyperparameters for a defined problem by using artificial intelligence trained with past data or the synthetic data Set Generation.

6. The method according to claim 5, further comprising a step of continuously updating the optimum algorithms, machines and hyperparameters for a defined problem by using artificial intelligence trained with new incoming data.

7. The method according to claim 5, further comprising a step of continuously updating the optimum algorithms, machines and hyperparameters for a defined problem adding new algorithms to the pool of available algorithms for solving.

8. The method according to claim 1, further comprising a step of solving at least one subproblem defined to at least one auxiliary machine, enabling parallel computing.

9. The method according to claim 1, wherein the step of solving at least one subproblem is performed by asynchronous management.

10. The method according to claim 1, wherein the annealing based solver is selected and the hyperparameters are:
- annealing time, selecting the time for the quantum annealer to evolve from an initial Hamiltonian to the problem Hamiltonian;
- annealing schedule, selecting how the Hamiltonian evolves over time; and
- chain strength of physical qubits representing logical qubits, selecting the strength of the connections between said physical qubits.

11. The method according to claim 1, wherein gate based solver is selected and the hyperparameters are:
- Circuit Depth, selecting a number of gate layers in the circuit;
- Gate Selection, selecting types of gates used and their arrangement;
- Error Correction Code, selecting a quantum error correction code, its code distance and its code rate; and
- Initial State Preparation, selecting the method used to prepare the initial state of the qubits.

12. A computer program adapted to perform the steps of the method of any of claims 1 to 11.

13. A computer readable storage medium comprising the computer program of claim 12.
